(19) **Europäisches Patentamt / European Patent Office / Office européen des brevets**

(11) **EP 4 624 299 A1**

(12) **EUROPEAN PATENT APPLICATION**

(43) Date of publication:
01.10.2025 Bulletin 2025/40

(21) Application number: 25165710.2

(22) Date of filing: 24.03.2025

(51) International Patent Classification (IPC):
**B61L 1/14** (2006.01)   **B61L 1/16** (2006.01)
**B61L 25/02** (2006.01)   **G01H 1/04** (2006.01)
**G01P 3/14** (2006.01)

(52) Cooperative Patent Classification (CPC):
**B61L 25/021; B61L 1/14; B61L 1/163; G01H 1/04; G01P 3/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 JP 2024048340**

(71) Applicant: **Seiko Epson Corporation**
**Tokyo 160-8801 (JP)**

(72) Inventor: **KOBAYASHI, Yoshihiro**
**Suwa-shi, 392-8502 (JP)**

(74) Representative: **Lewis Silkin LLP**
**Arbor**
**255 Blackfriars Road**
**London SE1 9AX (GB)**

(54) **MEASUREMENT METHOD, MEASUREMENT APPARATUS, MEASUREMENT SYSTEM, AND NON-TRANSITORY COMPUTER-READABLE STORAGE MEDIUM STORING MEASUREMENT PROGRAM**

(57)   A measurement method includes: an observation data acquisition step of acquiring observation data output from an observation apparatus; a passing time calculation step of calculating, based on the observation data, an entry time when a railway vehicle enters one end of a bridge and an exit time when the railway vehicle exits another end, and calculating a time which is a difference between the exit time and the entry time as a passing time; and a traveling speed function calculation step of calculating a traveling speed function when the railway vehicle travels on the bridge based on the passing time, a traveling distance of the railway vehicle during the passing time, a distance between a stop position of the railway vehicle and a position of an end of the bridge closer to the stop position, and a length between a front surface of a leading car and a leading axle of the railway vehicle.

*FIG. 1*

**Description**

The present application is based on, and claims priority from JP Application Serial Number 2024-048340, filed March 25, 2024, the disclosure of which is hereby incorporated by reference herein in its entirety.

BACKGROUND

1. Technical Field

The present disclosure relates to a measurement method, a measurement apparatus, a measurement system, and a non-transitory computer-readable storage medium storing a measurement program.

2. Related Art

JP-A-2014-6161 discloses a railway vehicle speed measurement method of mounting a differential LDV on a railway vehicle, emitting a laser beam from a laser light source to an object such as a rail, a tie, a ballast, an auxiliary rail, or an ATS on a railway infrastructure side, receiving scattered light from the object by a light receiving element of the differential LDV to extract a Doppler signal, and measuring a ground speed based on the Doppler signal.

However, in the measurement method disclosed in JP-A-2014-6161, cost increases since each railway vehicle needs to be equipped with the laser light source, and measurement accuracy also decreases in a case where reflected light or scattered light of the laser beam on a bridge is weak when each railway vehicle travels on the bridge. Meanwhile, although it is easy to measure a time required to pass the bridge with a measuring instrument provided at the bridge based on a response waveform caused by traveling of the railway vehicle and measure an average traveling speed of the railway vehicle using a bridge length and a train length that are known, it is not possible to easily measure the speed when the railway vehicle enters or exits the bridge. A method is desired to accurately measure a time function of a traveling speed when the railway vehicle travels on the bridge while decelerating or accelerating, such as when the railway vehicle passes a bridge in the vicinity of a stop station.

SUMMARY

An aspect of a measurement method according to the disclosure is
a measurement method for measuring, using an observation apparatus that observes an observation point of a bridge, a traveling speed function that is a time function of a traveling speed of a railway vehicle traveling on the bridge while decelerating or accelerating at a constant acceleration, the measurement method including:

   an observation data acquisition step of acquiring observation data output from the observation apparatus, the observation data including a response to an action of the railway vehicle on the observation point;
   a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and
   a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

An aspect of a measurement apparatus according to the disclosure is
a measurement apparatus for measuring, using an observation apparatus that observes an observation point of a bridge, a traveling speed function that is a time function of a traveling speed of a railway vehicle traveling on the bridge while decelerating or accelerating at a constant acceleration, the measurement apparatus including:

   an observation data acquisition unit configured to acquire observation data output from the observation apparatus, the observation data including a response to an action of the railway vehicle on the observation point;
   a passing time calculation unit configured to calculate, based on the observation data, an entry time when the railway vehicle enters one end of the bridge and an exit time when the railway vehicle exits another end of the bridge, and calculate a time which is a difference between the exit time and the entry time as a passing time; and
   a traveling speed function calculation unit configured to calculate the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

An aspect of a measurement system according to the disclosure includes:

the aspect of the measurement apparatus; and
the observation apparatus.

An aspect of a non-transitory computer-readable storage medium storing a measurement program according to the disclosure is

a non-transitory computer-readable storage medium storing a measurement program for measuring, using an observation apparatus that observes an observation point of a bridge, a traveling speed function that is a time function of a traveling speed of a railway vehicle traveling on the bridge while decelerating or accelerating at a constant acceleration, the measurement program causing a computer to execute

an observation data acquisition step of acquiring observation data output from the observation apparatus, the observation data including a response to an action of the railway vehicle on the observation point;
a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and
a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

BRIEF DESCRIPTION OF THE DRAWINGS

FIG. 1 shows a configuration example of a measurement system.
FIG. 2 is a cross-sectional view of a superstructure in FIG. 1 taken along line A-A.
FIG. 3 shows an acceleration detected by an acceleration sensor.
FIG. 4 shows, in time series, traveling as a railway vehicle decelerates and stops before a bridge.
FIG. 5 shows an example of a speed waveform obtained by integrating an acceleration contained in observation data.
FIG. 6 shows an example of each car of the railway vehicle.
FIG. 7 shows, in time series, traveling as the railway vehicle accelerates from a stop position, passes a bridge, and then transitions to constant speed traveling.
FIG. 8 is a flowchart showing an example of a procedure of a measurement method in a first embodiment.
FIG. 9 shows a configuration example of a sensor, a measurement apparatus, and a monitoring apparatus.
FIG. 10 shows frequency spectrum obtained by performing fast Fourier transform on the acceleration contained in the observation data.
FIG. 11 is a flowchart showing an example of a procedure of a measurement method in a second embodiment.
FIG. 12 shows a configuration example of a measurement apparatus in the second embodiment.
FIG. 13 shows another configuration example of the measurement system.
FIG. 14 shows another configuration example of the measurement system.
FIG. 15 shows an example of a waveform of displacement contained in the observation data.

DESCRIPTION OF EMBODIMENTS

Hereinafter, preferred embodiments of the disclosure will be described in detail with reference to the drawings. The embodiments to be described below do not unduly limit contents of the disclosure described in the claims. Not all configurations described below are necessarily essential components of the disclosure.

1. First Embodiment

1-1. Configuration of Measurement System

A weight of a railway vehicle passing a bridge is large and can be measured using BWIM. BWIM is an abbreviation for bridge weigh-in-motion, and is a technique for measuring the weight, the number of axles, and the like of the railway vehicle passing the bridge by treating the bridge as a "scale" and measuring deformation of the bridge. The bridge that can analyze the weight of the passing railway vehicle based on a response such as deformation or strain has a structure in which the BWIM functions, and a BWIM system that applies a physical process between an action on the bridge and the response enables the measurement of the weight of the passing railway vehicle.

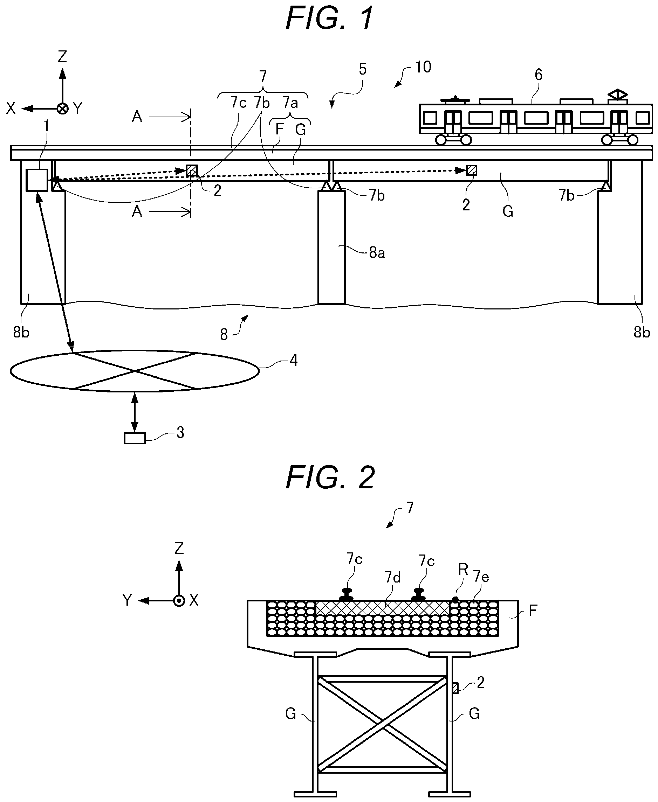

FIG. 1 shows an example of a measurement system according to an embodiment. As shown in FIG. 1, a measurement system 10 according to the embodiment includes a measurement apparatus 1, and at least one sensor 2 provided at a bridge 5. The measurement system 10 may further include a monitoring apparatus 3.

The bridge 5 includes a superstructure 7 and a substructure 8. FIG. 2 is a cross-sectional view of the superstructure 7 taken along line A-A in FIG. 1. As shown in FIGS. 1 and 2, the superstructure 7 includes a bridge deck 7a including a deck slab F, a main girder G, a cross girder (not shown), and the like, a bearing 7b, a rail 7c, a tie 7d, and a ballast 7e. As shown in FIG. 1, the substructure 8 includes a bridge pier 8a and a bridge abutment 8b. The superstructure 7 is a structure that spans across the bridge abutment 8b and the bridge pier 8a adjacent to each other, two adjacent bridge abutments 8b, or two adjacent bridge piers 8a. Both ends of the superstructure 7 are located at positions of the bridge abutment 8b and the bridge pier 8a adjacent to each other, at positions of the two adjacent bridge abutments 8b, or at positions of the two adjacent bridge piers 8a.

When a railway vehicle 6 enters the superstructure 7 of the bridge 5, the superstructure 7 deflects due to a load of the railway vehicle 6, and since the railway vehicle 6 has a plurality of coupled cars, the deflection of the superstructure 7 is periodically repeated as each car passes.

The measurement apparatus 1 and each sensor 2 are coupled by, for example, a cable (not shown), and communicate with each other via a communication network such as a CAN. CAN is an abbreviation for a controller area network. Alternatively, the measurement apparatus 1 and each sensor 2 may communicate with each other via a wireless network.

Each sensor 2 outputs observation data including a physical quantity generated when the railway vehicle 6 travels on the bridge 5. In the embodiment, each sensor 2 is an acceleration sensor and outputs acceleration data including an acceleration generated when the railway vehicle 6 travels on the bridge 5. Each sensor 2 may be, for example, a quartz crystal acceleration sensor or a MEMS acceleration sensor. MEMS is an abbreviation for micro electro mechanical systems.

In the embodiment, each sensor 2 is provided at a central portion in a longitudinal direction of the superstructure 7 of the bridge 5, specifically, at a central portion in a longitudinal direction of the main girder G. However, each sensor 2 only needs to be capable of detecting the acceleration generated due to the traveling of the railway vehicle 6, and an installation position thereof is not limited to the central portion of the superstructure 7. When each sensor 2 is provided at the deck slab F of the superstructure 7, the sensor 2 may be broken due to the traveling of the railway vehicle 6 and measurement accuracy may be affected due to local deformation of the bridge deck 7a, and thus each sensor 2 is provided at the main girder G of the superstructure 7 in the example in FIGS. 1 and 2.

The deck slab F, the main girder G, and the like of the superstructure 7 deflect in a vertical direction due to the load of the railway vehicle 6 passing the bridge 5. Each sensor 2 detects an acceleration of the deflection of the deck slab F and the main girder G due to the load of the railway vehicle 6 passing the bridge 5.

Based on the acceleration data output from each sensor 2, the measurement apparatus 1 calculates a traveling speed function that is a function of a traveling speed when the railway vehicle 6 passes the bridge 5. The measurement apparatus 1 is provided at, for example, the bridge abutment 8b.

The measurement apparatus 1 and the monitoring apparatus 3 can communicate with each other via, for example, a wireless network of a mobile phone and a communication network 4 such as the Internet. The measurement apparatus 1 transmits, to the monitoring apparatus 3, measurement data including the traveling speed function when the railway vehicle 6 passes the bridge 5. The monitoring apparatus 3 may store the measurement data in a storage apparatus (not shown) and perform processing such as monitoring of the railway vehicle 6 and abnormality determination of the superstructure 7 based on the traveling speed function contained in the measurement data.

In the embodiment, the bridge 5 is a railway bridge such as a steel bridge, a girder bridge, or an RC bridge. RC is an abbreviation for reinforced-concrete.

As shown in FIG. 2, in the embodiment, an observation point R is set in association with the sensor 2. In the example in FIG. 2, the observation point R is set at a position on a surface of the superstructure 7 located vertically above the sensor 2 provided at the main girder G. That is, the sensor 2 is an observation apparatus that observes the observation point R, detects the physical quantity that is a response to an action of a plurality of parts of the railway vehicle 6 traveling on the bridge 5 on the observation point R, and outputs the observation data including the detected physical quantity. For example, each of the plurality of parts of the railway vehicle 6 is an axle or a wheel, and is hereinafter assumed to be the axle. In the embodiment, each sensor 2 is an acceleration sensor and detects an acceleration as the physical quantity. The sensor 2 only needs to be provided at a position where the acceleration generated at the observation point R due to the traveling of the railway vehicle 6 can be detected, and is desirably provided at a position close to vertically above the observation point R.

The number and the installation position of the sensor 2 are not limited to the example shown in FIGS. 1 and 2, and various modifications can be made.

Based on the observation data output from the sensor 2, the measurement apparatus 1 acquires an acceleration in a direction intersecting a surface of the superstructure 7 of the bridge 5 where the railway vehicle 6 travels. The surface of the superstructure 7 where the railway vehicle 6 travels is defined by a direction in which the railway vehicle 6 travels, that is, an X direction that is the longitudinal direction of the superstructure 7, and a direction orthogonal to the direction in which the railway vehicle 6 travels, that is, a Y direction that is a width direction of the superstructure 7. Since the observation point R deflects in a direction orthogonal to the X direction and the Y direction due to the traveling of the railway vehicle 6, it is desirable that the measurement apparatus 1 acquires an acceleration in the direction orthogonal to the X direction and the Y direction, that is, a Z direction that is a normal direction of the deck slab F, in order to accurately calculate magnitude of the acceleration of the deflection.

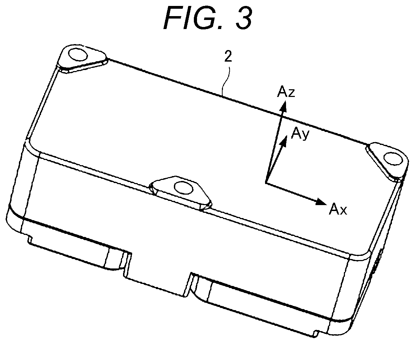

FIG. 3 shows the acceleration detected by the sensor 2. The sensor 2 is an acceleration sensor that detects the acceleration generated in each of three axes orthogonal to one another.

In order to detect the acceleration of the deflection of the observation point R caused by the traveling of the railway vehicle 6, the sensor 2 is provided such that one of an x-axis, a y-axis, and a z-axis, which are three detection axes, is in a direction intersecting the X direction and the Y direction. Since the observation point R deflects in the direction orthogonal to the X direction and the Y direction, in order to accurately detect the acceleration of deflection, ideally, the sensor 2 is provided such that one axis is aligned with the Z direction orthogonal to the X direction and the Y direction, that is, the normal direction of the deck slab F.

However, when the sensor 2 is provided at the superstructure 7, an installation location may be inclined. In the measurement apparatus 1, even when one of the three detection axes of the sensor 2 is not aligned with the normal direction of the deck slab F, since the axis is substantially oriented in the normal direction, an error is small and thus can be ignored. Even when one of the three detection axes of the sensor 2 is not aligned with the normal direction of the deck slab F, the measurement apparatus 1 can correct a detection error caused by inclination of the sensor 2 using a three-axis combined acceleration obtained by combining accelerations in the x-axis, the y-axis, and the z-axis. Alternatively, the sensor 2 may be a uniaxial acceleration sensor that at least detects an acceleration generated in a direction substantially parallel to the vertical direction or an acceleration in the normal direction of the deck slab F.

Hereinafter, details of a measurement method according to the embodiment performed by the measurement apparatus 1 will be described. In the following description, unless otherwise specified, the bridge 5 and the superstructure 7 are not distinguished on an assumption that the bridge 5 includes one superstructure 7. When the bridge 5 includes a plurality of superstructures 7, the following description holds by regarding each superstructure 7 to be measured, where the sensor 2 is provided, as one bridge 5.

1-2. Details of Measurement Method

When the bridge 5 is located in the vicinity of a stop station of the railway vehicle 6, the railway vehicle 6 starts decelerating before the bridge 5, and aligns with and stops at a stop position P of the stop station, or accelerates from the stop position P, passes the bridge 5, and then transitions to constant speed traveling. In the former case, a traveling acceleration $a_C$ as the railway vehicle 6 decelerates can be regarded as a constant negative value, and in the latter case, the traveling acceleration $a_C$ as the railway vehicle 6 accelerates can be regarded as a constant positive value.

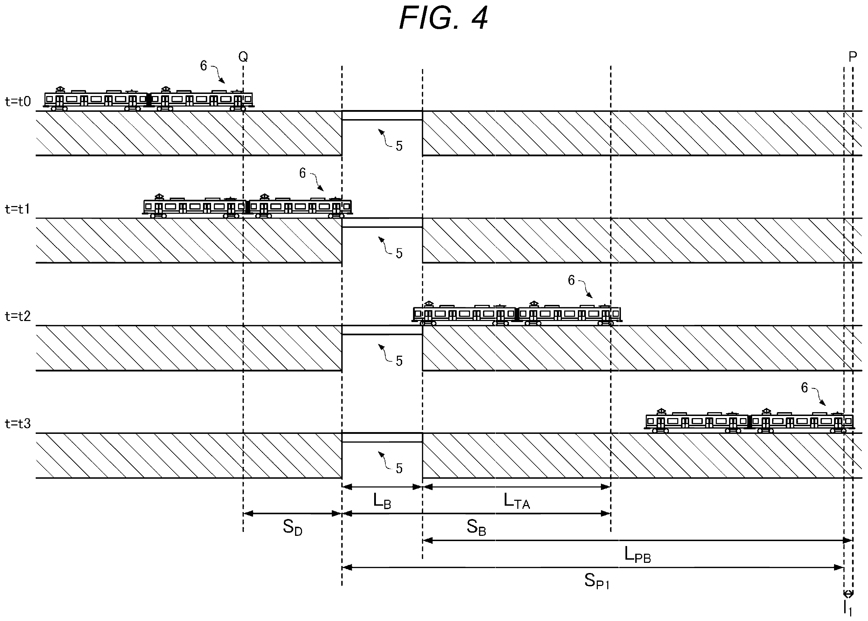

FIG. 4 shows, in time series, traveling as the railway vehicle 6 decelerates before the bridge 5 and stops at the stop position P. In FIG. 4, the railway vehicle 6 is shown as a two-car formation, but the number of cars of the railway vehicle 6 is not limited to two, and may be one or any number of three or more.

In FIG. 4, at a time t = t0, the railway vehicle 6 traveling at a constant speed starts decelerating. A position of a leading axle of a leading car when the railway vehicle 6 starts decelerating is defined as a deceleration start position Q. Next, at a time t = t1, the railway vehicle 6 enters the bridge 5 while decelerating at the constant negative acceleration $a_C$. The time t1 is a time when the leading axle of the leading car of the railway vehicle 6 is located at a far end of the bridge 5 from the stop position P, and is referred to as an entry time $t_i$. Next, at a time t = t2, the railway vehicle 6 exits the bridge 5 while decelerating at the constant negative acceleration $a_C$. The time t2 is a time when a trailing axle of a trailing car of the railway vehicle 6 is located at a near end of the bridge 5 from the stop position P, and is referred to as an exit time $t_o$. Finally, at a time t = t3, the railway vehicle 6 stops at the stop position P. The stop position P is a position of a front surface of the leading car of the railway vehicle 6 when the railway vehicle 6 is stopped, and is a fixed position.

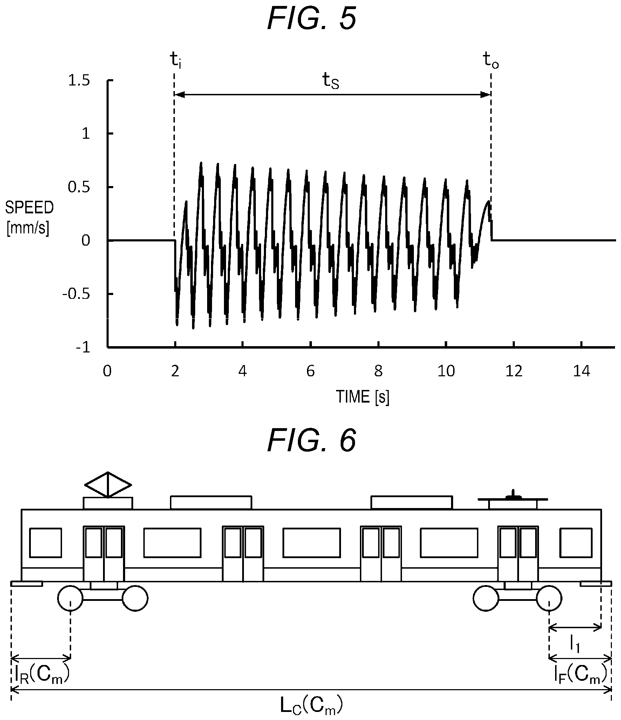

The entry time $t_i$ and the exit time $t_o$ are calculated from, for example, a speed waveform obtained by integrating an acceleration contained in the observation data output from the sensor 2. FIG. 5 shows an example of the speed waveform obtained by integrating the acceleration. As shown in FIG. 5, since the speed waveform vibrates during a period in which the railway vehicle 6 travels on the bridge 5, a time when the vibration of the speed waveform starts corresponds to the entry time $t_i$, and a time when the vibration ends corresponds to the exit time $t_o$. A passing time $t_S$, which is a time required for the railway vehicle 6 to pass the bridge 5, is calculated as a time which is a difference between the exit time $t_o$

and the entry time $t_i$ as in Formula (1).
Math. 1

$$t_S = t_o - t_i \cdots (1)$$

A traveling distance $S_B$ of the railway vehicle 6 from entering the bridge 5 to exiting is expressed by Formula (2), where a bridge length $L_B$ is a length of the bridge 5, and an axle distance $L_{TA}$ is a distance between the leading axle of the leading car and the trailing axle of the trailing vehicle of the railway vehicle 6.
Math. 2

$$S_B = L_B + L_{TA} \cdots (2)$$

The bridge length $L_B$ is contained in environmental information created in advance. The environmental information includes, in addition to the bridge length $L_B$, the number of cars $C_T$ of the railway vehicle 6, a dimension of each car of the railway vehicle 6, and the like. The environmental information includes, as the dimension of each car, for example, a length $L_C(C_m)$ of each car, a length $l_1$ between a front surface and a leading axle of each car, a length $l_F(C_m)$ between a front end and the leading axle of each car, and a length $l_R(C_m)$ between a rear end and a trailing axle of each car. Here, $C_m$ is a car number, and for example, the length $L_C(C_m)$ of each car is a length of a $C_m$-th car from a leading end. FIG. 6 shows examples of the lengths $L_C(C_m)$, $l_1$, $l_F(C_m)$, and $l_R(C_m)$ of the $C_m$-th car of the railway vehicle 6. For example, $L_C(C_m)$ is 20 m, $l_1$ is 1.80 m, $l_F(C_m)$ is 2.05 m, and $l_R(C_m)$ is 2.05 m. The dimension of the railway vehicle 6 can be measured using a known method. A database of the dimension of the railway vehicle 6 passing the bridge 5 may be created in advance, and a dimension of a corresponding car may be referred to based on a passing time.

The measurement apparatus 1 can calculate the axle distance $L_{TA}$ from Formula (3) with reference to the environmental information. In Formula (3), $L_T$ is a length of the railway vehicle 6 and is calculated from Formula (4).
Math. 3

$$L_{TA} = L_T - l_F(1) - l_R(C_T) \cdots (3)$$

Math. 4

$$L_T = \sum_{y=1}^{C_T} L_C(y) \cdots (4)$$

A traveling distance $S_{P1}$ of the railway vehicle 6 from entering the bridge 5 to stopping is calculated from Formula (5) using a distance $L_{PB}$ between the stop position P and a position of an end closer to the stop position P among one end and the other end of the bridge 5, the bridge length $L_B$, and the length $l_1$ between the front surface and the leading axle of each car. The distance $L_{PB}$ is a fixed value and is contained in the environmental information.
Math. 5

$$S_{P1} = L_{PB} + L_B - l_1 \cdots (5)$$

A traveling speed function v(t) of the railway vehicle 6 is expressed by Formula (6), where the entry time $t_i$ of the railway vehicle 6 to the bridge 5 is a time t = 0, the exit time $t_o$ is a time t = $t_S$, the railway vehicle 6 traveling at an operating speed $v_D$ starts decelerating at the negative acceleration $a_C$ from a time $t_D$, $v_A$ is an entry speed of the railway vehicle 6 to the bridge 5, and $t_P$ is a time when the railway vehicle 6 stops.
Math. 6

$$v(t) = \begin{cases} if\ t < t_D & v_D \\ if\ t_D \le t < t_P & a_C t + v_A \\ if\ t = t_S & v_C \\ if\ t_P \le t & 0 \end{cases} \cdots (6)$$

A relationship between the distance $S_{P1}$ traveled by the railway vehicle 6 from entering the bridge 5 to stopping, the entry speed $v_A$ of the railway vehicle 6 to the bridge 5, and the time $t_P$ from when the railway vehicle 6 enters the bridge 5 to when the railway vehicle stops is expressed by Formula (7).
Math. 7

$$S_{P1} = \frac{1}{2} v_A t_P \cdots (7)$$

A relationship between an exit speed $v_C$ of the railway vehicle 6 from the bridge 5, and a traveling distance $S_{P1} - S_B$ and a traveling time $t_P - t_S$ of the railway vehicle 6 from exiting the bridge 5 to stopping is expressed by Formula (8).
Math. 8

$$\frac{1}{2} v_C (t_P - t_S) = S_{P1} - S_B \cdots (8)$$

Assuming that the acceleration $a_C$ is constant, Formula (9) holds.
Math. 9

$$\frac{v_A}{t_P} = \frac{v_C}{t_P - t_S} \cdots (9)$$

Formula (10) is obtained by eliminating the time $t_P$ and the speed $v_C$ from Formulas (7), (8), and (9). In Formula (10), the distance $S_{P1}$ is calculated from Formula (5) described above using the environmental information. The distance $S_B$ is calculated from Formula (2) described above using the environmental information. The passing time $t_S$ is calculated from Formula (1) using the observation data output from the sensor 2. That is, since the distances $S_{P1}$, $S_B$ and the passing time $t_S$ are known, Formula (10) is a quadratic equation of the speed $v_A$.
Math. 10

$$t_S^2 v_A^2 - 4 S_{P1} t_S v_A + 4 S_{P1} S_B = 0 \cdots (10)$$

By solving Formula (10), the entry speed $v_A$ of the railway vehicle 6 to the bridge 5 is obtained from Formula (11).
Math. 11

$$v_A = 2 S_{P1} \frac{1 \pm \sqrt{1 - \dfrac{S_B}{S_{P1}}}}{t_S} \cdots (11)$$

Formula (11) is substituted into Formula (7), and the time $t_P$ from when the railway vehicle 6 enters the bridge 5 to when the railway vehicle 6 stops is obtained from Formula (12).
Math. 12

$$t_P = \frac{1}{1 \pm \sqrt{1 - \dfrac{S_B}{S_{P1}}}} t_S \cdots (12)$$

Since a relationship between the passing time $t_S$ and the time $t_P$ from when the railway vehicle 6 enters the bridge 5 to when the railway vehicle 6 stops satisfies $0 < t_S < t_P$, and a relationship between the traveling distance $S_B$ of the railway vehicle 6 during the passing time $t_S$ and the traveling distance $S_{P1}$ of the railway vehicle 6 from entering the bridge 5 to stopping satisfies $S_B < S_{P1}$, the entry speed $v_A$ is expressed by Formula (13) from Formula (11).
Math. 13

$$v_A = 2S_{P1} \frac{1 - \sqrt{1 - \frac{S_B}{S_{P1}}}}{t_S} \cdots (13)$$

The acceleration $a_C$ is obtained from Formula (14).
Math. 14

$$a_C = -\frac{v_A}{t_P} = -\frac{v_A{}^2}{2S_{P1}} \cdots (14)$$

The traveling speed function v(t) shown in Formula (15) is obtained from Formulas (13) and (14). In Formula (15), $t_D \le t \le t_P$.
Math. 15

$$v(t) = a_C t + v_A \cdots (15)$$

From Formula (15), the exit speed $v_C$ of the railway vehicle 6 is calculated using Formula (16).
Math. 16

$$v_C = a_C t_S + v_A \cdots (16)$$

From Formula (15), the time $t_P$ when the railway vehicle 6 stops is calculated using Formula (17).
Math. 17

$$t_P = -\frac{v_A}{a_C} \cdots (17)$$

From Formula (15), the time $t_D$ when the railway vehicle 6 traveling at the operating speed $v_D$ starts decelerating is calculated using Formula (18). The operating speed $v_D$ is a constant speed determined for each traveling section of the railway vehicle 6, and is contained in the environmental information.
Math. 18

$$t_D = \frac{v_D - v_A}{a_C} \cdots (18)$$

Since an average traveling speed in a period from the time $t_D$ when the railway vehicle 6 starts decelerating to the time t = 0 when the railway vehicle 6 enters the bridge 5 is $(v_D - v_A)/2$, the distance $S_D$ traveled from when the railway vehicle 6 starts decelerating to when the railway vehicle 6 enters the bridge 5 is calculated from Formula (19).
Math. 19

$$S_D = -\frac{1}{2}\frac{(v_D - v_A)^2}{a_C} \cdots (19)$$

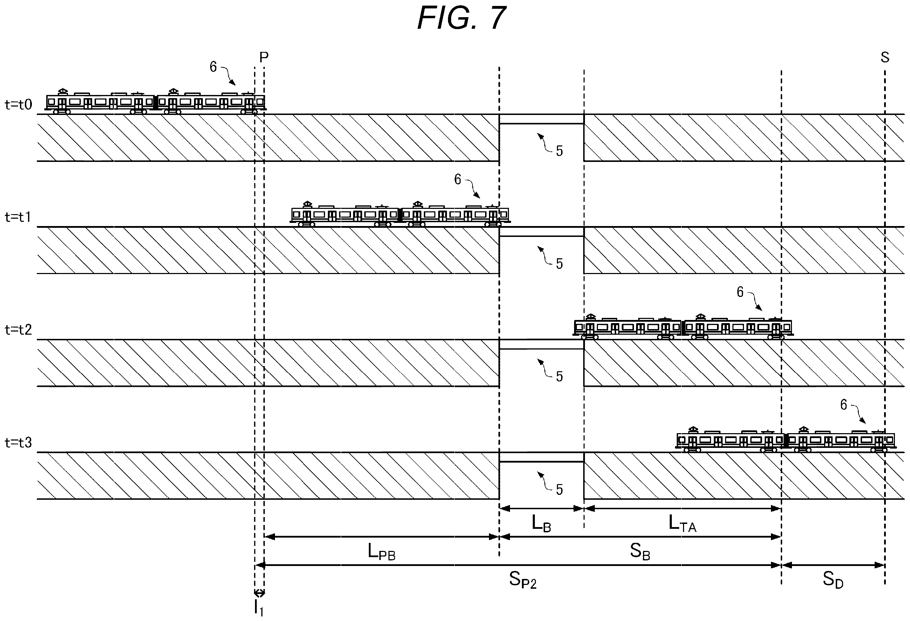

FIG. 7 shows, in time series, traveling as the railway vehicle 6 accelerates from the stop position P, passes the bridge 5, and then transitions to constant speed traveling. In FIG. 7, the railway vehicle 6 is shown as a two-car formation, but the number of cars $C_T$ of the railway vehicle 6 is not limited to two, and may be one or any number of three or more.
In FIG. 7, at the time t = t0, the railway vehicle 6 stopped at the stop position P sets off and starts accelerating. The stop position P is the position of the front surface of the leading car of the railway vehicle 6 when the railway vehicle 6 is stopped, and is a fixed position. Next, at the time t = t1, the railway vehicle 6 enters the bridge 5 while accelerating at the constant positive acceleration $a_C$. The time t1 is a time when the leading axle of the leading car of the railway vehicle 6 is located at the near end of the bridge 5 from the stop position P, and is referred to as the entry time $t_i$. Next, at the time t = t2, the railway vehicle 6 exits the bridge 5 while accelerating at the constant positive acceleration $a_C$. The time t2 is a time when the trailing axle of the trailing car of the railway vehicle 6 is located at the far end of the bridge 5 from the stop position P, and is referred to as the exit time $t_o$. Finally, at the time t = t3, the railway vehicle 6 ends the acceleration traveling and starts constant speed traveling at the predetermined constant operating speed $v_D$. The position of the leading axle of the leading car when the railway vehicle 6 ends accelerating is defined as an acceleration end position S.

A traveling distance $S_{P2}$ of the railway vehicle 6 from starting accelerating at the stop position P to exiting the bridge 5 is calculated from Formula (20) using the traveling distance $S_B$ of the railway vehicle 6 from entering the bridge 5 to exiting, the distance $L_{PB}$ between the stop position P and the position of the end closer to the stop position P among the one end and the other end of the bridge 5, and the length $l_1$ between the front surface and the leading axle of each car. The distance $L_{PB}$ and the length $l_1$ are fixed values and are contained in the environmental information. The traveling distance $S_B$ is calculated from Formula (2) described above using the bridge length $L_B$ and the axle distance $L_{TA}$. The axle distance $L_{TA}$ is calculated from Formula (3) described above.

Math. 20

$$S_{P2} = S_B + L_{PB} + l_1 \cdots (20)$$

As described above, the entry time $t_i$ and the exit time $t_o$ of the railway vehicle 6 with respect to the bridge 5 are calculated based on the observation data, and when the railway vehicle 6 sets off at the time t = 0, an entry time $t_i'$ and an exit time $t_o'$ of the railway vehicle 6 with respect to the bridge 5 are unknown. Meanwhile, the passing time $t_S$ required for the railway vehicle 6 to pass the bridge 5 corresponds to a time which is a difference between the exit time $t_o'$ and the entry time $t_i'$, and is calculated from Formula (21) since this time is equal to the time which is the difference between the exit time $t_o$ and the entry time $t_i$.

Math. 21

$$t_S = t_o - t_i = t_o' - t_i' \cdots (21)$$

The traveling speed function v(t) of the railway vehicle 6 is expressed by Formula (22), where the time when the railway vehicle 6 sets off is the time t = 0, the railway vehicle 6 starts accelerating at the positive acceleration $a_C$, $v_C$ is the entry speed of the railway vehicle 6 to the bridge 5, $v_A$ is the exit speed of the railway vehicle 6 from the bridge 5, and $t_D$ is a time when the railway vehicle 6 ends accelerating and starts constant speed traveling at the operating speed $v_D$.

Math. 22

$$v(t) = \begin{cases} if \ t = 0 & 0 \\ if \ 0 \le t < t_D & a_C t \\ if \ t = t_i' & v_C \\ if \ t = t_o' & v_A \\ if \ t \le t_D & v_D \end{cases} \cdots (22)$$

Since an average speed of the railway vehicle 6 from starting accelerating to entering the bridge 5 is $v_C/2$, a distance $L_{PB} + l_1$ traveled by the railway vehicle 6 from starting accelerating to entering the bridge 5 is expressed by Formula (23).

Math. 23

$$L_{PB} + l_1 = \frac{1}{2} v_C t_i' \cdots (23)$$

From Formula (23) and Formula (20) described above, Formula (24) is obtained.

Math. 24

$$v_C = 2 \frac{L_{PB} + l_1}{t_i'} = 2 \frac{S_{P2} - S_B}{t_i'} \cdots (24)$$

Since an average speed of the railway vehicle 6 from starting accelerating to exiting the bridge 5 is $v_A/2$, the distance $S_{P2}$ traveled by the railway vehicle 6 from starting accelerating to exiting the bridge 5 is expressed by Formula (25).
Math. 25

$$S_{P2} = \frac{1}{2} v_A t_o' = \frac{1}{2} v_A (t_S + t_i') \cdots (25)$$

Formula (26) is obtained from Formula (25).
Math. 26

$$t_i' = \frac{2S_{P2} - v_A t_S}{v_A} \cdots (26)$$

Since an average speed of the railway vehicle 6 from entering the bridge 5 to exiting is $(v_A - v_C)/2$, the traveling distance $S_B$ of the railway vehicle 6 from entering the bridge 5 to exiting is expressed by Formula (27).
Math. 27

$$S_B = \frac{1}{2} (v_A - v_C) t_S \cdots (27)$$

Formula (28) is obtained from Formula (27).
Math. 28

$$v_A = \frac{2S_B - v_C t_S}{t_S} \cdots (28)$$

Formula (29) is obtained by eliminating the entry time $t_i'$ and the speed $v_C$ from Formulas (24), (26), and (28). In Formula (29), the distance $S_{P2}$ is calculated from Formula (20) described above using the environmental information. The distance $S_B$ is calculated from Formula (2) described above using the environmental information. The passing time $t_S$ is calculated from Formula (21) using the observation data output from the sensor 2. That is, since the distances $S_{P2}$, $S_B$ and the passing time $t_S$ are known, Formula (29) is a quadratic equation of the speed $v_A$.
Math. 29

$$-t_S^2 v_A^2 + 4t_S S_{P2} v_A - 4S_{P2} S_B = 0 \cdots (29)$$

By solving Formula (29), the exit speed $v_A$ of the railway vehicle 6 from the bridge 5 is obtained from Formula (30).
Math. 30

$$v_A = 2S_{P2} \frac{1 \mp \sqrt{1 - \frac{S_B}{S_{P2}}}}{t_S} \cdots (30)$$

Formula (30) is substituted into Formula (25), and the exit time $t_o'$ is obtained from Formula (31).
Math. 31

$$t_o' = \frac{2S_{P2}}{v_A} = \frac{t_S}{1 \mp \sqrt{1 - \frac{S_B}{S_{P2}}}} \cdots (31)$$

Since a relationship between the passing time $t_S$ and the exit time $t_o'$ satisfies $0 < t_S < t_o'$, and a relationship between the traveling distance $S_B$ of the railway vehicle 6 during the passing time $t_S$ and the traveling distance $S_{P2}$ of the railway vehicle 6 from starting accelerating to exiting the bridge 5 satisfies $S_B < S_{P2}$, the exit speed $v_A$ is expressed by Formula (32) from Formula (30).

Math. 32

$$v_A = 2S_{P2} \frac{1 - \sqrt{1 - \dfrac{S_B}{S_{P2}}}}{t_S} \cdots (32)$$

The entry speed $v_C$ of the railway vehicle 6 to the bridge 5 is obtained by substituting the exit speed $v_A$ in Formula (32) into Formula (33) obtained by modifying Formula (28).

Math. 33

$$v_C = \frac{2S_B - v_A t_S}{t_S} = \frac{2S_B}{t_S} - v_A \cdots (33)$$

The acceleration $a_C$ is expressed by Formula (34) using the entry speed $v_C$, the exit speed $v_A$, and the passing time $t_S$. Therefore, the acceleration $a_C$ is obtained by substituting the exit speed $v_A$ in Formula (32) and the entry speed $v_C$ in Formula (33) into Formula (34).

Math. 34

$$a_C = \frac{v_A - v_C}{t_s} \cdots (34)$$

The traveling speed function v(t) shown in Formula (35) is obtained from Formula (34). In Formula (35), $0 \le t \le t_D$.

Math. 35

$$v(t) = a_C t \cdots (35)$$

From Formula (35), the time $t_D$ when the railway vehicle 6 ends accelerating and starts constant speed traveling at the operating speed $v_D$ is calculated using Formula (36).

Math. 36

$$t_D = \frac{v_D}{a_C} \cdots (36)$$

Since an average traveling speed in a period from a time $t = t_o'$ when the railway vehicle 6 exits the bridge 5 to a time $t = t_D$ when the railway vehicle 6 ends accelerating is $(v_D - v_A)/2$, the distance $S_D$ traveled by the railway vehicle 6 from exiting the bridge 5 to ending accelerating is calculated from Formula (37).

Math. 37

$$S_D = \frac{1}{2}(v_D - v_A)t_D = \frac{1}{2}\frac{(v_D - v_A)v_D}{a_C} \cdots (37)$$

1-3. Procedure of Measurement Method

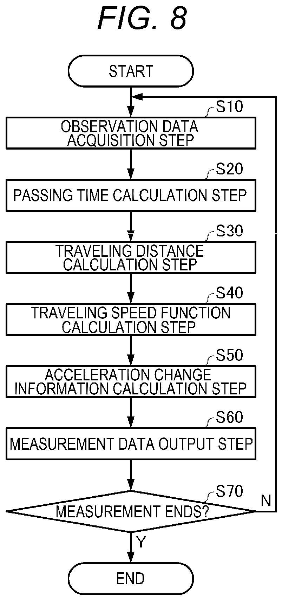

FIG. 8 is a flowchart showing an example of a procedure of a measurement method according to a first embodiment. The measurement method in the embodiment is a measurement method for measuring, using the sensor 2 that is the observation apparatus for observing the observation point R of the bridge 5, the traveling speed function that is a time function of the traveling speed of the railway vehicle 6 traveling on the bridge 5 while decelerating or accelerating at the constant acceleration $a_C$. In the embodiment, the measurement apparatus 1 performs the procedure shown in FIG. 8.

As shown in FIG. 8, first, in an observation data acquisition step S10, the measurement apparatus 1 acquires the observation data output from the sensor 2 that is the observation apparatus. The observation data includes the response to the action of the railway vehicle 6 traveling on the bridge 5 on the observation point R. In the embodiment, the sensor 2 is an acceleration sensor provided at the bridge 5, and the observation data is acceleration data including an acceleration as the response.

Next, in a passing time calculation step S20, the measurement apparatus 1 calculates the passing time $t_S$ based on the acceleration data that is the observation data acquired in step S10. Specifically, the measurement apparatus 1 calculates, based on the observation data, the entry time $t_i$ when the railway vehicle 6 enters the one end of the bridge 5 and the exit time $t_o$ when the railway vehicle 6 exits from the other end of the bridge 5, and calculates the time which is the difference between the exit time $t_o$ and the entry time $t_i$ as the passing time $t_S$. For example, the measurement apparatus 1 may calculate the passing time $t_S$ using the times when the vibration of the speed waveform obtained by integrating the acceleration contained in the observation data starts and ends as the entry time $t_i$ and the exit time $t_o$, respectively.

Next, in a traveling distance calculation step S30, the measurement apparatus 1 calculates the traveling distance $S_B$ of the railway vehicle 6 during the passing time $t_S$ based on the number of cars $C_T$ of the railway vehicle 6, the dimension of each car of the railway vehicle 6, and the bridge length $L_B$ that is the length of the bridge 5 contained in the environmental information created in advance. The dimension of each car of the railway vehicle 6 is the length $L_C(C_m)$ of each car, the length $l_1$ between the front surface and the leading axle of each car, the length $l_F(C_m)$ between the front end and the leading axle of each car, and the length $l_R(C_m)$ between the rear end and the trailing axle of each car. The traveling distance $S_B$ of the railway vehicle 6 during the passing time $t_S$ is a sum of the bridge length $L_B$ and the axle distance $L_{TA}$ that is the distance between the leading axle of the leading car and the trailing axle of the trailing car of the railway vehicle 6. The measurement apparatus 1 calculates the axle distance $L_{TA}$ from Formula (3) described above and calculates the traveling distance $S_B$ from Formula (2) described above.

Next, in a traveling speed function calculation step S40, the measurement apparatus 1 calculates the traveling speed function that is the time function of the traveling speed when the railway vehicle 6 travels on the bridge 5, based on the passing time $t_S$ calculated in step S20, the traveling distance $S_B$ of the railway vehicle 6 during the passing time $t_S$ calculated in step S30, the distance $L_{PB}$ between the stop position P of the railway vehicle 6 and the position of the end closer to the stop position P among the one end and the other end of the bridge 5, and the length $l_1$ between the front surface of the leading car and the leading axle of the railway vehicle 6. The traveling speed function when the railway vehicle 6 performs deceleration traveling is expressed by, for example, Formula (15) described above, and the measurement apparatus 1 calculates the acceleration $a_C$, which is a first-order coefficient in Formula (15), from Formula (13) and calculates the entry speed $v_A$, which is a zero-order coefficient in Formula (15), from Formula (14). The traveling speed function when the railway vehicle 6 performs acceleration traveling is expressed by, for example, Formula (35) described above, and the measurement apparatus 1 calculates the acceleration $a_C$, which is a first-order coefficient in Formula (35), from Formulas (32), (33), and (35) described above.

Next, in an acceleration change information calculation step S50, the measurement apparatus 1 calculates the position Q where and the time $t_D$ when the railway vehicle 6 starts decelerating or the position S where and the time $t_D$ when the railway vehicle 6 ends accelerating, based on the traveling speed function calculated in step S40 and the operating speed $v_D$ that is a constant speed before the railway vehicle 6 starts decelerating or after the railway vehicle 6 ends accelerating. When the railway vehicle 6 performs deceleration traveling, since the deceleration start position Q is a position separated from an entry end of the bridge 5 by the distance $S_D$, the measurement apparatus 1 calculates the deceleration start position Q by calculating the distance $S_D$ from Formula (19) described above. The measurement apparatus 1 calculates the deceleration start time $t_D$ from Formula (18) described above. When the railway vehicle 6 performs acceleration traveling, the acceleration end position S is a position separated from the entry end of the bridge 5 by the distance $S_B$ + the distance $S_D$, and thus the measurement apparatus 1 calculates the acceleration end position S by calculating the distances $S_B$ and $S_D$ from Formulas (2) and (37) described above, respectively. The measurement apparatus 1 also calculates the acceleration end time $t_D$ from Formula (36) described above.

Next, in a measurement data output step S60, the measurement apparatus 1 outputs the measurement data including the traveling speed function calculated in step S40 to the monitoring apparatus 3. Specifically, the measurement apparatus 1 transmits the measurement data to the monitoring apparatus 3 via the communication network 4. The measurement data may further include the deceleration start position Q and the deceleration start time $t_D$, the acceleration end position S and the acceleration end time $t_D$, or the like.

The measurement apparatus 1 repeats the processing of steps S10 to S60 until measurement is ended in step S70.

1-4. Configurations of Sensor, Measurement Apparatus, and Monitoring Apparatus

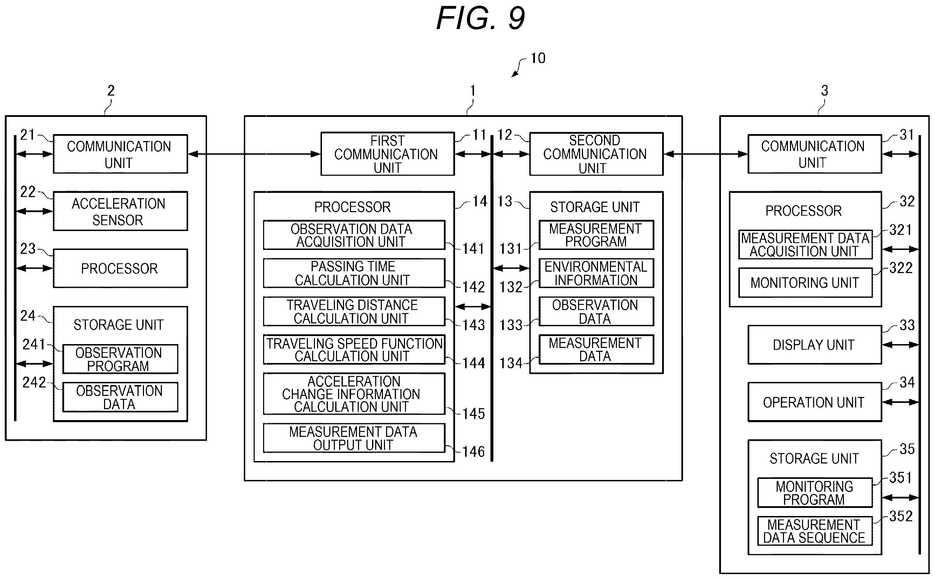

FIG. 9 shows a configuration example of the sensor 2, the measurement apparatus 1, and the monitoring apparatus 3. As shown in FIG. 9, the sensor 2 includes a communication unit 21, an acceleration sensor 22, a processor 23, and a storage unit 24.

The storage unit 24 is a memory that stores various programs, data, and the like for the processor 23 to perform calculation processing and control processing. The storage unit 24 also stores a program, data, and the like for the processor 23 to implement a predetermined application function.

The acceleration sensor 22 detects an acceleration generated in each axial direction of the three axes.

The processor 23 controls the acceleration sensor 22 by executing an observation program 241 stored in the storage unit 24, generates observation data 242 based on the acceleration detected by the acceleration sensor 22, and stores the generated observation data 242 in the storage unit 24. In the embodiment, the observation data 242 is the acceleration data.

The communication unit 21 transmits the observation data 242 stored in the storage unit 24 to the measurement apparatus 1 under control of the processor 23.

As shown in FIG. 9, the measurement apparatus 1 includes a first communication unit 11, a second communication unit 12, a storage unit 13, and a processor 14.

The first communication unit 11 receives the observation data 242 from the sensor 2 and outputs the received observation data 242 to the processor 14.

The storage unit 13 is a memory that stores a program, data, and the like for the processor 14 to perform calculation processing and control processing. The storage unit 13 also stores various programs, data, and the like for the processor 14 to implement a predetermined application function. The processor 14 may receive various programs, data, and the like via the communication network 4 and store the programs, the data, and the like in the storage unit 13.

The processor 14 generates measurement data 134 based on the observation data 242 received by the first communication unit 11, and stores the generated measurement data 134 in the storage unit 13.

In the embodiment, the processor 14 functions as an observation data acquisition unit 141, a passing time calculation unit 142, a traveling distance calculation unit 143, a traveling speed function calculation unit 144, an acceleration change information calculation unit 145, and a measurement data output unit 146 by executing a measurement program 131 stored in the storage unit 13. That is, the processor 14 includes the observation data acquisition unit 141, the passing time calculation unit 142, the traveling distance calculation unit 143, the traveling speed function calculation unit 144, the acceleration change information calculation unit 145, and the measurement data output unit 146.

The observation data acquisition unit 141 acquires the observation data 242 received by the first communication unit 11 and stores the observation data 242 in the storage unit 13 as observation data 133. That is, the observation data acquisition unit 141 performs the processing of the observation data acquisition step S10 in FIG. 8. In the embodiment, the observation data 133 is the acceleration data.

The passing time calculation unit 142 calculates the passing time $t_S$ based on the acceleration data that is the observation data 133 acquired by the observation data acquisition unit 141. Specifically, the passing time calculation unit 142 calculates, based on the observation data 133, the entry time $t_i$ when the railway vehicle 6 enters the one end of the bridge 5 and the exit time $t_o$ when the railway vehicle 6 exits from the other end of the bridge 5, and calculates the time which is the difference between the exit time $t_o$ and the entry time $t_i$ as the passing time $t_S$. For example, the passing time calculation unit 142 may calculate the passing time $t_S$ using the times when the vibration of the speed waveform obtained by integrating the acceleration contained in the observation data 133 starts and ends as the entry time $t_i$ and the exit time $t_o$, respectively. That is, the passing time calculation unit 142 performs the processing of the passing time calculation step S20 in FIG. 8.

The traveling distance calculation unit 143 calculates the traveling distance $S_B$ of the railway vehicle 6 during the passing time $t_S$, based on the number of cars $C_T$ of the railway vehicle 6, the dimension of each car of the railway vehicle 6, and the bridge length $L_B$ that is the length of the bridge 5 contained in environmental information 132 created in advance and stored in the storage unit 13. The dimension of each car of the railway vehicle 6 is the length $L_C(C_m)$ of each car, the length $l_1$ between the front surface and the leading axle of each car, the length $l_F(C_m)$ between the front end and the leading axle of each car, and the length $l_R(C_m)$ between the rear end and the trailing axle of each car. The traveling distance $S_B$ of the railway vehicle 6 during the passing time $t_S$ is the sum of the bridge length $L_B$ and the axle distance $L_{TA}$ that is the distance between the leading axle of the leading car and the trailing axle of the trailing car of the railway vehicle 6. The traveling distance calculation unit 143 calculates the axle distance $L_{TA}$ from Formula (3) described above and calculates the traveling distance $S_B$ from Formula (2) described above. That is, the traveling distance calculation unit 143 performs the processing of the traveling distance calculation step S30 in FIG. 8.

The traveling speed function calculation unit 144 calculates the traveling speed function that is the time function of the traveling speed when the railway vehicle 6 travels on the bridge 5, based on the passing time $t_S$ calculated by the passing time calculation unit 142, the traveling distance $S_B$ of the railway vehicle 6 during the passing time $t_S$ calculated by the traveling distance calculation unit 143, the distance $L_{PB}$ between the stop position P of the railway vehicle 6 and the position of the end closer to the stop position P among the one end and the other end of the bridge 5, and the length $l_1$ between the front surface of the leading car and the leading axle of the railway vehicle 6. The traveling speed function when the railway vehicle 6 performs deceleration traveling is expressed by, for example, Formula (15) described above, and the traveling speed function calculation unit 144 calculates the acceleration $a_C$, which is the first-order coefficient in Formula (15), from Formula (13) and calculates the entry speed $v_A$, which is the zero-order coefficient in Formula (15), from Formula (14). The traveling speed function when the railway vehicle 6 performs acceleration traveling is expressed by, for example, Formula (35) described above, and the traveling speed function calculation unit 144 calculates the acceleration $a_C$, which is the first-order coefficient in Formula (35), from Formulas (32), (33), and (35) described above. That is, the traveling speed function calculation unit 144 performs the processing of the traveling speed function calculation step S40 in FIG. 8.

The acceleration change information calculation unit 145 calculates the position Q where and the time $t_D$ when the railway vehicle 6 starts decelerating or the position S where and the time $t_D$ when the railway vehicle 6 ends accelerating, based on the traveling speed function calculated by the traveling speed function calculation unit 144 and the operating speed $v_D$ that is the constant speed before the railway vehicle 6 starts decelerating or after the railway vehicle 6 ends accelerating. When the railway vehicle 6 performs deceleration traveling, since the deceleration start position Q is the position separated from the entry end of the bridge 5 by the distance $S_D$, the acceleration change information calculation unit 145 calculates the deceleration start position Q by calculating the distance $S_D$ from Formula (19) described above. The acceleration change information calculation unit 145 also calculates the deceleration start time $t_D$ from Formula (18) described above. When the railway vehicle 6 performs acceleration traveling, the acceleration end position S is the position separated from the entry end of the bridge 5 by the distance $S_B$ + the distance $S_D$, and thus the acceleration change information calculation unit 145 calculates the acceleration end position S by calculating the distances $S_B$ and $S_D$ from Formulas (2) and (37) described above, respectively. The acceleration change information calculation unit 145 also calculates the acceleration end time $t_D$ from Formula (36) described above. That is, the acceleration change information calculation unit 145 performs the processing of the acceleration change information calculation step S50 in FIG. 8.

The traveling speed function calculated by the traveling speed function calculation unit 144 is stored in the storage unit 13 as at least a part of the measurement data 134. The measurement data 134 may further include the deceleration start position Q and the deceleration start time $t_D$, the acceleration end position S and the acceleration end time $t_D$, or the like calculated by the acceleration change information calculation unit 145.

The measurement data output unit 146 reads the measurement data 134 stored in the storage unit 13 and outputs the measurement data 134 to the monitoring apparatus 3. Specifically, under control of the measurement data output unit 146, the second communication unit 12 transmits the measurement data 134 stored in the storage unit 13 to the monitoring apparatus 3 via the communication network 4. That is, the measurement data output unit 146 performs the processing of the measurement data output step S60 in FIG. 8.

In this way, the measurement program 131 is a program that causes the measurement apparatus 1, which is a computer, to execute each procedure in the flowchart shown in FIG. 8.

As shown in FIG. 9, the monitoring apparatus 3 includes a communication unit 31, a processor 32, a display unit 33, an operation unit 34, and a storage unit 35.

The communication unit 31 receives the measurement data 134 from the measurement apparatus 1 and outputs the received measurement data 134 to the processor 32.

The display unit 33 displays various types of information under control of the processor 32. The display unit 33 may be, for example, a liquid crystal display or an organic EL display. EL is an abbreviation for electro luminescence.

The operation unit 34 outputs operation data corresponding to an operation performed by a user to the processor 32. The operation unit 34 may be an input device such as a mouse, a keyboard, or a microphone.

The storage unit 35 is a memory that stores various programs, data, and the like for the processor 32 to perform calculation processing and control processing. The storage unit 35 also stores a program, data, and the like for the processor 32 to implement a predetermined application function.

The processor 32 acquires the measurement data 134 received by the communication unit 31, generates evaluation information by evaluating the traveling speed function of the railway vehicle 6 based on the acquired measurement data 134, and displays the generated evaluation information on the display unit 33.

In the embodiment, the processor 32 functions as a measurement data acquisition unit 321 and a monitoring unit 322 by executing a monitoring program 351 stored in the storage unit 35. That is, the processor 32 includes the measurement data acquisition unit 321 and the monitoring unit 322.

The measurement data acquisition unit 321 acquires the measurement data 134 received by the communication unit 31 and adds the acquired measurement data 134 to a measurement data sequence 352 stored in the storage unit 35.

The monitoring unit 322 evaluates the traveling speed function of the railway vehicle 6 based on the measurement data sequence 352 stored in the storage unit 35. Then, the monitoring unit 322 generates the evaluation information indicating an evaluation result and displays the generated evaluation information on the display unit 33. Based on the evaluation information displayed on the display unit 33, the user can monitor the traveling speed of the railway vehicle 6 and a state of the bridge 5.

The monitoring unit 322 may perform processing such as monitoring of the railway vehicle 6 and abnormality determination of the bridge 5 based on the measurement data sequence 352 stored in the storage unit 35.

The processor 32 transmits, based on the operation data output from the operation unit 34, information for adjusting an operation status of the measurement apparatus 1 or the sensor 2 to the measurement apparatus 1 via the communication unit 31. The operation status of the measurement apparatus 1 is adjusted based on the information received via the second communication unit 12. The measurement apparatus 1 transmits the information for adjusting the operation status of the sensor 2 received via the second communication unit 12 to the sensor 2 via the first communication unit 11. The operation status of the sensor 2 is adjusted based on the information received via the communication unit 21.

In the processors 14, 23, and 32, for example, functions of each part may be implemented using individual pieces of hardware, or the functions of each part may be implemented using integrated hardware. For example, the processors 14, 23, and 32 include hardware, and the hardware may include at least one of a circuit for processing a digital signal and a circuit for processing an analog signal. The processors 14, 23, and 32 may be a CPU, a GPU, a DSP, or the like. CPU is an abbreviation for a central processing unit, GPU is an abbreviation for a graphics processing unit, and DSP is an abbreviation for a digital signal processor. The processors 14, 23, and 32 may each be implemented as a custom IC such as an ASIC to implement the function of each unit, or the function of each unit may be implemented by a CPU and an ASIC. ASIC is an abbreviation for an application-specific integrated circuit, and IC is an abbreviation for an integrated circuit.

The storage units 13, 24, and 35 each include a recording medium, for example, various IC memories such as a ROM, a flash ROM, and a RAM, a hard disk, or a memory card. ROM is an abbreviation for a read-only memory, RAM is an abbreviation for a random access memory, and IC is an abbreviation for an integrated circuit. The storage units 13, 24, and 35 each include a non-volatile information storage device that is a computer-readable device or medium, and various programs, data, and the like may be stored in the information storage device. The information storage device may be an optical disk such as an optical disk DVD or CD, a hard disk drive, or various types of memories such as a card-type memory or a ROM.

Only one sensor 2 is shown in FIG. 9, and alternatively, a plurality of sensors 2 may each generate the observation data 242 and transmit the observation data 242 to the measurement apparatus 1. In this case, the measurement apparatus 1 receives a plurality of pieces of observation data 242 transmitted from the plurality of sensors 2, generates a plurality of pieces of measurement data 134, and transmits the plurality of pieces of measurement data 134 to the monitoring apparatus 3. The monitoring apparatus 3 receives the plurality of pieces of measurement data 134 transmitted from the measurement apparatus 1 and monitors the traveling speed of the railway vehicle 6 and the state of the bridge 5 based on the received plurality of pieces of measurement data 134.

1-5. Functions and Effects

As described above, in the measurement method in the first embodiment, the measurement apparatus 1 calculates the passing time $t_S$ for the railway vehicle 6 to pass the bridge 5 based on the observation data output from the observation apparatus. The measurement apparatus 1 also calculates, as the traveling distance $S_B$ of the railway vehicle 6 during the passing time $t_S$, a distance from when the leading axle of the leading car of the railway vehicle 6 enters the bridge 5 to when the trailing axle of the trailing car exits the bridge 5, based on the number of cars $C_T$ of the railway vehicle 6, the dimension of each car, and the bridge length $L_B$ contained in the environmental information created in advance. Then, the measurement apparatus 1 can accurately calculate the traveling speed function when the railway vehicle 6 travels on the bridge 5 while decelerating or accelerating, based on the passing time $t_S$ and the traveling distance $S_B$ thus calculated, the distance $L_{PB}$ between the stop position P and the position of the end of the bridge 5 closer to the stop position P, and the length $l_1$ between the front surface and the leading axle of the railway vehicle 6.

According to the measurement method in the first embodiment, the measurement apparatus 1 can accurately calculate the deceleration start position Q or the acceleration end position S of the railway vehicle 6 and the time thereof, based on the traveling speed function and the operating speed $v_D$ that is the constant speed before the railway vehicle 6 starts decelerating or after the railway vehicle 6 ends accelerating.

2. Second Embodiment

Hereinafter, in a second embodiment, the same components as those in the first embodiment will be denoted by the same reference signs, repetitive description as that in the first embodiment will be omitted or simplified, and contents different from those in the first embodiment will be mainly described.

In the first embodiment, it is assumed that the number of cars $C_T$ of the railway vehicle 6 passing the bridge 5 does not change, and the number of cars $C_T$ is contained in the environmental information as a fixed value. However, the number of cars $C_T$ may change for each railway vehicle 6 passing the bridge 5 depending on a route. Therefore, in the second embodiment, the number of cars $C_T$ is not contained in the environmental information, and the measurement apparatus 1 calculates the number of cars $C_T$ of the railway vehicle 6 based on the observation data output from the sensor 2.

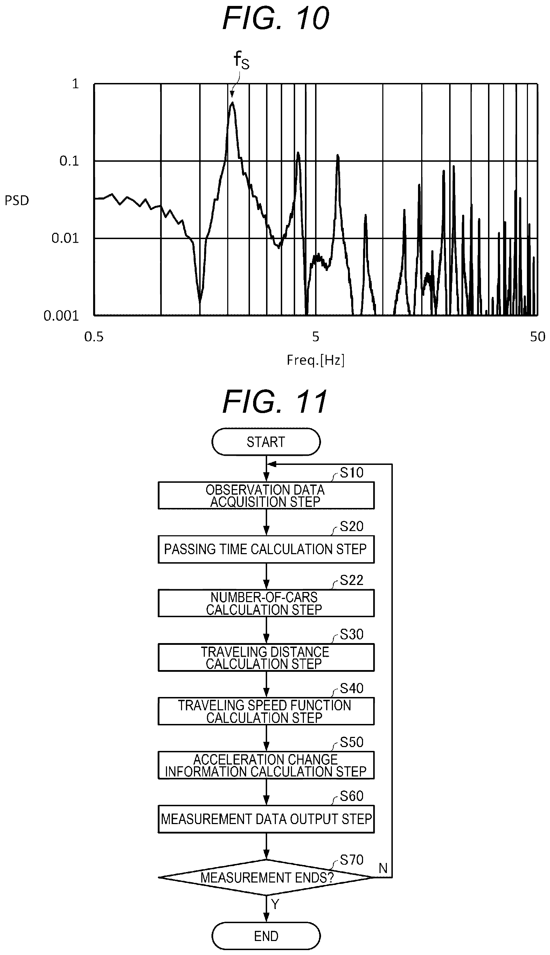

In FIG. 10, frequency spectrum obtained by performing fast Fourier transform on the acceleration contained in the observation data when the railway vehicle 6 passes the bridge 5 is indicated by a solid line. As shown in FIG. 10, the observation data includes a signal component of a fundamental frequency $f_S$ that is a lowest peak frequency, and a harmonic component thereof. The fundamental frequency $f_S$ corresponds to a reciprocal of a cycle of load application to the bridge 5 by each car when the railway vehicle 6 passes the bridge 5. Therefore, the measurement apparatus 1 can calculate the number of cars $C_T$ of the railway vehicle 6 based on the passing time $t_S$ and the fundamental frequency $f_S$ from Formula (38).

Math. 38

$$C_T = \lfloor t_S f_S - 1 \rfloor \cdots (38)$$

FIG. 11 is a flowchart showing an example of a procedure of a measurement method in the second embodiment. In FIG. 11, the same steps as those in FIG. 8 are denoted by the same reference signs. In the embodiment, the measurement apparatus 1 performs the procedure shown in FIG. 11.

As shown in FIG. 11, first, the measurement apparatus 1 performs the observation data acquisition step S10 and further performs the passing time calculation step S20. Since the processing of the observation data acquisition step S10 and the passing time calculation step S20 are the same as those in the first embodiment, description thereof will be omitted.

Next, in a number-of-cars calculation step S22, the measurement apparatus 1 calculates the number of cars $C_T$ of the railway vehicle 6 based on the observation data acquired in step S10. Specifically, first, the measurement apparatus 1 calculates frequency spectrum by performing fast Fourier transform on the acceleration contained in the observation data, and then the measurement apparatus 1 calculates the lowest peak frequency of the frequency spectrum as the fundamental frequency $f_S$. Then, the measurement apparatus 1 calculates the number of cars $C_T$ from Formula (38) described above using the passing time $t_S$ and the fundamental frequency $f_S$ calculated in step S20.

Next, in the traveling distance calculation step S30, the measurement apparatus 1 calculates the traveling distance $S_B$ of the railway vehicle 6 during the passing time $t_S$ based on the number of cars $C_T$ calculated in step S22, and the dimension of each car of the railway vehicle 6 and the bridge length $L_B$ contained in the environmental information created in advance. The measurement apparatus 1 calculates the axle distance $L_{TA}$ from Formula (3) described above and calculates the traveling distance $S_B$ from Formula (2) described above.

Next, the measurement apparatus 1 performs the traveling speed function calculation step S40, the acceleration change information calculation step S50, and the measurement data output step S60. Since the processing of the traveling speed function calculation step S40, the acceleration change information calculation step S50, and the measurement data output step S60 is the same as that in the first embodiment, description thereof will be omitted.

The measurement apparatus 1 repeats the processing of steps S10 to S60 until measurement is ended in step S70.

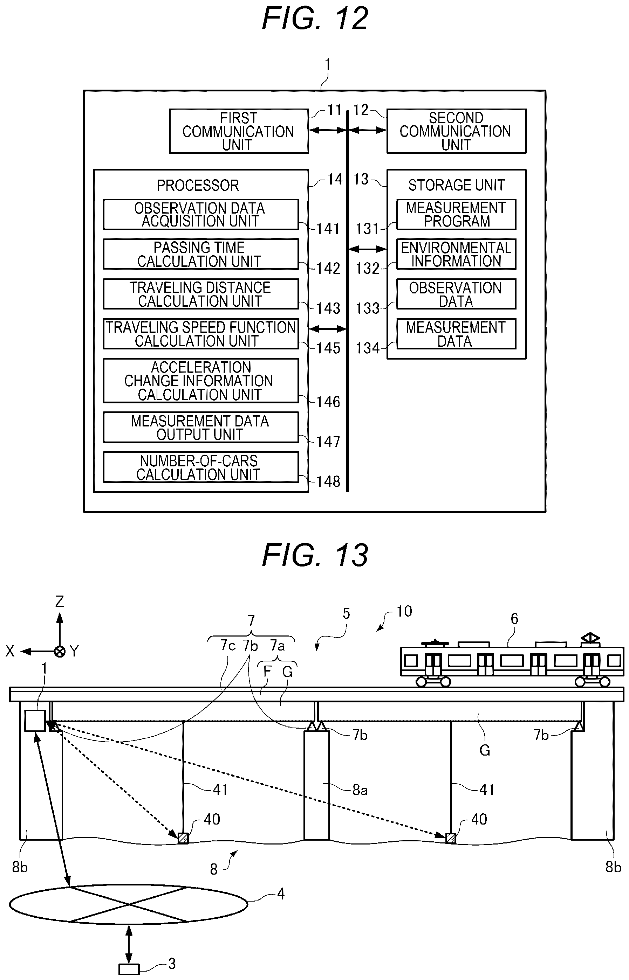

Since configurations and functions of the sensor 2 and the monitoring apparatus 3 in the second embodiment are the same as those in the first embodiment, illustration thereof is omitted. FIG. 12 shows a configuration example of the measurement apparatus 1 in the second embodiment.

As shown in FIG. 12, the measurement apparatus 1 in the second embodiment includes the first communication unit 11, the second communication unit 12, the storage unit 13, and the processor 14 as in the first embodiment. Since functions of the first communication unit 11, the second communication unit 12, and the storage unit 13 are the same as those in the first embodiment, description thereof will be omitted.

In the second embodiment, the processor 14 functions as the observation data acquisition unit 141, the passing time calculation unit 142, the traveling distance calculation unit 143, the traveling speed function calculation unit 144, the acceleration change information calculation unit 145, the measurement data output unit 146, and a number-of-cars calculation unit 147 by executing the measurement program 131 stored in the storage unit 13. That is, the processor 14 includes the observation data acquisition unit 141, the passing time calculation unit 142, the traveling distance calculation unit 143, the traveling speed function calculation unit 144, the acceleration change information calculation unit 145, the measurement data output unit 146, and the number-of-cars calculation unit 147. Since functions of the observation data acquisition unit 141, the passing time calculation unit 142, the traveling speed function calculation unit 144, the acceleration change information calculation unit 145, and the measurement data output unit 146 are the same as those in the first embodiment, description thereof will be omitted. The observation data acquisition unit 141 performs the processing of the observation data acquisition step S10 in FIG. 11. The passing time calculation unit 142 performs the processing of the passing time calculation step S20 in FIG. 11. The traveling speed function calculation unit 144 performs the processing of the traveling speed function calculation step S40 in FIG. 11. The acceleration change information calculation unit 145 performs the processing of the acceleration change information calculation step S50 in FIG. 11. The measurement data output unit 146 performs the processing of the measurement data output step S60 in FIG. 11.

The number-of-cars calculation unit 147 calculates the number of cars $C_T$ of the railway vehicle 6 based on the observation data 133 acquired by the observation data acquisition unit 141. Specifically, first, the number-of-cars calculation unit 147 calculates the frequency spectrum by performing the fast Fourier transform on the acceleration contained in the observation data 133, and then the number-of-cars calculation unit 147 calculates the lowest peak frequency of the frequency spectrum as the fundamental frequency $f_S$. Then, the number-of-cars calculation unit 147 calculates the number of cars $C_T$ from Formula (38) described above using the passing time $t_S$ and the fundamental frequency $f_S$ calculated by the passing time calculation unit 142. That is, the number-of-cars calculation unit 147 performs the processing of the number-of-cars calculation step S22 in FIG. 11.

The traveling distance calculation unit 143 calculates the traveling distance $S_B$ of the railway vehicle 6 during the passing time $t_S$, based on the number of cars $C_T$ calculated by the number-of-cars calculation unit 147, and the dimension of each car of the railway vehicle 6 and the bridge length $L_B$ contained in the environmental information 132 created in advance and stored in the storage unit 13. The traveling distance calculation unit 143 calculates the axle distance $L_{TA}$ from Formula (3) described above and calculates the traveling distance $S_B$ from Formula (2) described above. That is, the traveling distance calculation unit 143 performs the processing of the traveling distance calculation step S30 in FIG. 11.

Other functions of the measurement apparatus 1 in the second embodiment are the same as those in the first embodiment, and description thereof will be omitted.

According to the measurement method in the second embodiment described above, the same functions and effects as those in the measurement method in the first embodiment can be obtained. Further, according to the measurement method in the second embodiment, since the measurement apparatus 1 can calculate the number of cars $C_T$ of the railway vehicle 6 based on the observation data, the traveling speed function can be accurately calculated even when the number of cars $C_T$ is unknown.

3. Modifications

The disclosure is not limited to the embodiments, and various modifications can be made within the scope of the gist of the disclosure.

For example, in each of the above embodiments, each sensor 2 is provided at the main girder G of the superstructure 7, and alternatively, the sensor 2 may be provided at the surface of or inside the superstructure 7, at a lower surface of the deck slab F or the bridge pier 8a.

In the embodiments described above, the sensor 2 that is the observation apparatus is the acceleration sensor that outputs the acceleration data as the observation data, but the observation apparatus used for calculating the passing time $t_S$ is not limited to the acceleration sensor. For example, the observation apparatus may be a shock sensor, a pressure-sensitive sensor, a strain gauge, an image measurement apparatus, a load cell, or a displacement gauge.

The shock sensor detects a shock acceleration as a response to an action of each axle of the railway vehicle 6 on the observation point R. The pressure-sensitive sensor, the strain gauge, and the load cell detect a stress change as the response to the action of each axle of the railway vehicle 6 on the observation point R. The image measurement apparatus detects the displacement as the response to the action of each axle of the railway vehicle 6 on the observation point R through image processing. The displacement gauge is, for example, a displacement measurement apparatus using a contact-type displacement gauge, a ring-type displacement gauge, a laser displacement gauge, a pressure-sensitive sensor, or an optical fiber, which detects displacement as the response to the action of each axle of the railway vehicle 6 on the observation point R.

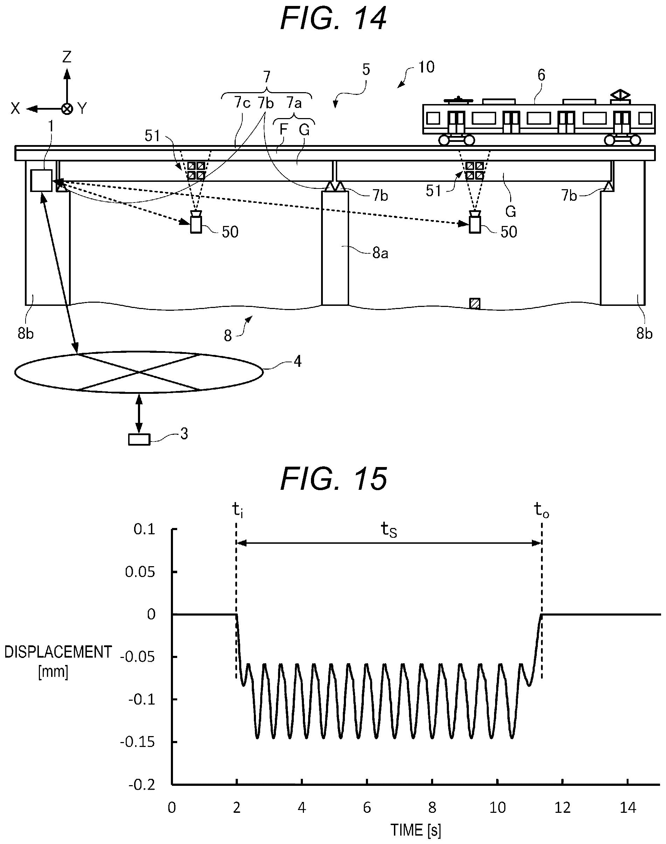

As an example, FIG. 13 shows a configuration example of the measurement system 10 using a ring-type displacement gauge as the observation apparatus. FIG. 14 shows a configuration example of the measurement system 10 using an image measurement apparatus as the observation apparatus. In FIGS. 13 and 14, the same components as those in FIG. 1 are denoted by the same reference signs, and description thereof will be omitted. In the measurement system 10 shown in FIG. 13, a piano wire 41 is fixed between an upper surface of a ring-type displacement gauge 40 and a lower surface of the main girder G directly above the ring-type displacement gauge 40. The ring-type displacement gauge 40 measures displacement of the piano wire 41 caused by deflection of the superstructure 7 and transmits measured displacement data to the measurement apparatus 1. The measurement apparatus 1 generates the measurement data 134 based on the displacement data transmitted from the ring-type displacement gauge 40. In the measurement system 10 shown in FIG. 14, a camera 50 transmits an image obtained by capturing an image of a target 51 provided at a side surface of the main girder G to the measurement apparatus 1. The measurement apparatus 1 processes the image transmitted from the camera 50, calculates displacement of the target 51 caused by the deflection of the superstructure 7 to generate displacement data, and generates the measurement data 134 based on the generated displacement data. In the example in FIG. 14, the measurement apparatus 1 serves as the image measurement apparatus to generate the displacement data, and alternatively, an image measurement apparatus (not shown) different from the measurement apparatus 1 may generate displacement data through image processing.

When the observation apparatus is the displacement gauge, the observation data includes displacement of the bridge 5. The measurement apparatus 1 calculates the entry time $t_i$ and the exit time $t_o$ based on a waveform of the displacement contained in the observation data. FIG. 15 shows an example of the waveform of the displacement. As shown in FIG. 15, since the displacement waveform vibrates during a period in which the railway vehicle 6 travels on the bridge 5, a time when the vibration of the displacement waveform starts corresponds to the entry time $t_i$, and a time when the vibration ends corresponds to the exit time $t_o$. The measurement apparatus 1 may calculate, as the passing time $t_S$, the time which is the difference between the exit time $t_o$ and the entry time $t_i$ calculated from the displacement waveform as in Formula (1) described above.

The above embodiments and modifications are examples, and the disclosure is not limited thereto. For example, the embodiments and modifications may be combined as appropriate.

The disclosure includes configurations that are substantially identical to the configurations described in the embodiments, such as configurations where functions, methods, and results are the same, or configurations that achieve the same objects and effects. The disclosure includes configurations obtained by replacing non-essential portions of the configurations described in the embodiments. The disclosure includes configurations that can obtain the same functions and effects and configurations that can achieve the same object as the configurations described in the embodiments. The disclosure includes configurations obtained by adding known techniques to the configurations described in the embodiments.

The following contents are derived from the embodiments and the modifications described above.

An aspect of a measurement method is

a measurement method for measuring, using an observation apparatus that observes an observation point of a bridge, a traveling speed function that is a time function of a traveling speed of a railway vehicle traveling on the bridge while decelerating or accelerating at a constant acceleration, the measurement method including:

an observation data acquisition step of acquiring observation data output from the observation apparatus, the observation data including a response to an action of the railway vehicle on the observation point;

a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and

a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

According to this measurement method, it is possible to accurately calculate the traveling speed function when the railway vehicle travels on the bridge while decelerating or accelerating, based on the time for the railway vehicle to pass the bridge calculated based on the observation data, the traveling distance during this time, the distance between the stop position and the end of the bridge, and the length between the front surface and the leading axle of the railway vehicle.

An aspect of the measurement method may further include

a traveling distance calculation step of calculating the traveling distance based on the number of cars of the railway vehicle, a dimension of each of the cars of the railway vehicle, and a length of the bridge which are contained in environmental information created in advance.

According to this measurement method, it is possible to accurately calculate the traveling distance of the railway vehicle during the passing time and accurately calculate the traveling speed function, based on the number of cars of the railway vehicle, the dimension of each car, and the length of the bridge contained in the environmental information created in advance.

An aspect of the measurement method may further include

a number-of-cars calculation step of calculating the number of cars of the railway vehicle based on the observation data; and

a traveling distance calculation step of calculating the traveling distance based on a dimension of each of the cars of the railway vehicle and a length of the bridge which are contained in environmental information created in advance, and the number of cars.

According to this measurement method, it is possible to accurately calculate the traveling distance of the railway vehicle during the passing time based on the number of cars of the railway vehicle calculated based on the observation data, and the dimension of each car and the length of the bridge contained in the environmental information created in advance. Therefore, according to this measurement method, the traveling speed function can be accurately calculated even when the number of cars of the railway vehicle is unknown.

In an aspect of the measurement method,

the traveling distance may be a sum of a length of the bridge and a distance between the leading axle of the leading car and a trailing axle of a trailing car of the railway vehicle.

According to this measurement method, the distance from when the leading axle of the leading car of the railway vehicle enters the bridge to when the trailing axle of the trailing car exits the bridge can be accurately calculated as the traveling distance of the railway vehicle during the passing time, and the traveling speed function can be accurately calculated.

An aspect of the measurement method may further include:
an acceleration change information calculation step of calculating, based on the traveling speed function and a constant speed before the railway vehicle starts decelerating or after the railway vehicle ends accelerating, a position where and a time when the railway vehicle starts decelerating or a position where and a time when the railway vehicle ends accelerating.

According to this measurement method, the deceleration start position or the acceleration end position of the railway vehicle and the time thereof can be accurately calculated.

In an aspect of the measurement method,
the observation apparatus may be an acceleration sensor, a shock sensor, a pressure-sensitive sensor, a strain gauge, an image measurement apparatus, a load cell, or a displacement gauge.

An aspect of a measurement apparatus is
a measurement apparatus for measuring, using an observation apparatus that observes an observation point of a bridge, a traveling speed function that is a time function of a traveling speed of a railway vehicle traveling on the bridge while decelerating or accelerating at a constant acceleration, the measurement apparatus including:

an observation data acquisition unit configured to acquire observation data output from the observation apparatus, the observation data including a response to an action of the railway vehicle on the observation point;
a passing time calculation unit configured to calculate, based on the observation data, an entry time when the railway vehicle enters one end of the bridge and an exit time when the railway vehicle exits another end of the bridge, and calculate a time which is a difference between the exit time and the entry time as a passing time; and
a traveling speed function calculation unit configured to calculate the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

According to this measurement apparatus, it is possible to accurately calculate the traveling speed function when the railway vehicle travels on the bridge while decelerating or accelerating, based on the time for the railway vehicle to pass the bridge calculated based on the observation data, the traveling distance during this time, the distance between the stop position and the end of the bridge, and the length between the front surface and the leading axle of the railway vehicle.

An aspect of a measurement system includes:

the aspect of the measurement apparatus; and
the observation apparatus.

An aspect of a non-transitory computer-readable storage medium storing a measurement program is

a non-transitory computer-readable storage medium storing a measurement program for measuring, using an observation apparatus that observes an observation point of a bridge, a traveling speed function that is a time function of a traveling speed of a railway vehicle traveling on the bridge while decelerating or accelerating at a constant acceleration, the measurement program causing a computer to execute
an observation data acquisition step of acquiring observation data output from the observation apparatus, the observation data including a response to an action of the railway vehicle on the observation point;
a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and
a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

According to this measurement program, the computer can accurately calculate the traveling speed function when the railway vehicle travels on the bridge while decelerating or accelerating, based on the time for the railway vehicle to pass the bridge calculated based on the observation data, the traveling distance during this time, the distance between the stop position and the end of the bridge, and the length between the front surface and the leading axle of the railway vehicle.

**Claims**

1. A measurement method for measuring, using an observation apparatus that observes an observation point of a bridge, a traveling speed function that is a time function of a traveling speed of a railway vehicle traveling on the bridge while decelerating or accelerating at a constant acceleration, the measurement method comprising:

   an observation data acquisition step of acquiring observation data output from the observation apparatus, the observation data including a response to an action of the railway vehicle on the observation point;
   a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and
   a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

2. The measurement method according to claim 1, further comprising:
   a traveling distance calculation step of calculating the traveling distance based on the number of cars of the railway vehicle, a dimension of each of the cars of the railway vehicle, and a length of the bridge which are contained in environmental information created in advance.

3. The measurement method according to claim 1, further comprising:

   a number-of-cars calculation step of calculating the number of cars of the railway vehicle based on the observation data; and
   a traveling distance calculation step of calculating the traveling distance based on a dimension of each of the cars of the railway vehicle and a length of the bridge which are contained in environmental information created in advance, and the number of cars.

4. The measurement method according to claim 1, wherein
   the traveling distance is a sum of a length of the bridge and a distance between the leading axle of the leading car and a trailing axle of a trailing car of the railway vehicle.

5. The measurement method according to claim 1, further comprising:
   an acceleration change information calculation step of calculating, based on the traveling speed function and a constant speed before the railway vehicle starts decelerating or after the railway vehicle ends accelerating, a position where and a time when the railway vehicle starts decelerating or a position where and a time when the railway vehicle ends accelerating.

6. The measurement method according to claim 1, wherein
   the observation apparatus is an acceleration sensor, a shock sensor, a pressure-sensitive sensor, a strain gauge, an image measurement apparatus, a load cell, or a displacement gauge.

7. A measurement apparatus for measuring, using an observation apparatus that observes an observation point of a bridge, a traveling speed function that is a time function of a traveling speed of a railway vehicle traveling on the bridge while decelerating or accelerating at a constant acceleration, the measurement apparatus comprising:

   an observation data acquisition unit configured to acquire observation data output from the observation apparatus, the observation data including a response to an action of the railway vehicle on the observation point;
   a passing time calculation unit configured to calculate, based on the observation data, an entry time when the railway vehicle enters one end of the bridge and an exit time when the railway vehicle exits another end of the bridge, and calculate a time which is a difference between the exit time and the entry time as a passing time; and
   a traveling speed function calculation unit configured to calculate the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

8. A measurement system comprising:

the measurement apparatus according to claim 7; and
the observation apparatus.

9. A non-transitory computer-readable storage medium storing a measurement program for measuring, using an observation apparatus that observes an observation point of a bridge, a traveling speed function that is a time function of a traveling speed of a railway vehicle traveling on the bridge while decelerating or accelerating at a constant acceleration, the measurement program causing a computer to execute

an observation data acquisition step of acquiring observation data output from the observation apparatus, the observation data including a response to an action of the railway vehicle on the observation point;
a passing time calculation step of calculating, based on the observation data, an entry time when the railway vehicle enters one end of the bridge and an exit time when the railway vehicle exits another end of the bridge, and calculating a time which is a difference between the exit time and the entry time as a passing time; and
a traveling speed function calculation step of calculating the traveling speed function based on the passing time, a traveling distance of the railway vehicle during the passing time, a distance between a stop position of the railway vehicle and a position of an end closer to the stop position among the one end and the other end of the bridge, and a length between a front surface of a leading car and a leading axle of the railway vehicle.

## FIG. 1

## FIG. 2

# FIG. 3

*FIG. 4*

## FIG. 5

## FIG. 6

EP 4 624 299 A1

## FIG. 7

## FIG. 8

```
            START
              │
              ▼               ┌─── S10
   ┌─────────────────────┐
   │  OBSERVATION DATA    │
   │  ACQUISITION STEP    │
   └─────────────────────┘
              │               ┌─── S20
              ▼
   ┌─────────────────────┐
   │PASSING TIME CALCULATION STEP│
   └─────────────────────┘
              │               ┌─── S30
              ▼
   ┌─────────────────────┐
   │  TRAVELING DISTANCE  │
   │  CALCULATION STEP    │
   └─────────────────────┘
              │               ┌─── S40
              ▼
   ┌─────────────────────┐
   │TRAVELING SPEED FUNCTION│
   │  CALCULATION STEP    │
   └─────────────────────┘
              │               ┌─── S50
              ▼
   ┌─────────────────────┐
   │ ACCELERATION CHANGE  │
   │INFORMATION CALCULATION STEP│
   └─────────────────────┘
              │               ┌─── S60
              ▼
   ┌─────────────────────┐
   │MEASUREMENT DATA OUTPUT STEP│
   └─────────────────────┘
              │               ┌─── S70    N
              ▼
        ◇ MEASUREMENT ENDS? ◇ ──────►
              │ Y
              ▼
            END
```

## FIG. 9

**2**
- COMMUNICATION UNIT — 21
- ACCELERATION SENSOR — 22
- PROCESSOR — 23
- STORAGE UNIT — 24
  - OBSERVATION PROGRAM — 241
  - OBSERVATION DATA — 242

**1** — 10
- FIRST COMMUNICATION UNIT — 11
- SECOND COMMUNICATION UNIT — 12
- PROCESSOR — 14
  - OBSERVATION DATA ACQUISITION UNIT — 141
  - PASSING TIME CALCULATION UNIT — 142
  - TRAVELING DISTANCE CALCULATION UNIT — 143
  - TRAVELING SPEED FUNCTION CALCULATION UNIT — 144
  - ACCELERATION CHANGE INFORMATION CALCULATION UNIT — 145
  - MEASUREMENT DATA OUTPUT UNIT — 146
- STORAGE UNIT — 13
  - MEASUREMENT PROGRAM — 131
  - ENVIRONMENTAL INFORMATION — 132
  - OBSERVATION DATA — 133
  - MEASUREMENT DATA — 134

**3**
- COMMUNICATION UNIT — 31
- PROCESSOR — 32
  - MEASUREMENT DATA ACQUISITION UNIT — 321
  - MONITORING UNIT — 322
- DISPLAY UNIT — 33
- OPERATION UNIT — 34
- STORAGE UNIT — 35
  - MONITORING PROGRAM — 351
  - MEASUREMENT DATA SEQUENCE — 352

EP 4 624 299 A1

## FIG. 10

## FIG. 11

## FIG. 12

## FIG. 13

## FIG. 14

## FIG. 15

Europäisches
Patentamt

European
Patent Office

Office européen
des brevets

# EUROPEAN SEARCH REPORT

**Application Number**

EP 25 16 5710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/019808 A1 (KOBAYASHI YOSHIHIRO [JP]) 19 January 2023 (2023-01-19)<br>* figures 1, 29, 32, 44 *<br>* paragraphs [0006], [0058], [0059], [0085], [0088], [0089] *<br>* paragraphs [0141], [0142], [0145], [0165], [0171], [0197], [0200], [0223], [0316] * | 1-9 | INV.<br>B61L1/14<br>B61L1/16<br>B61L25/02<br>G01H1/04<br>G01P3/14 |
| | - - - - - | | |
| A | CN 116 451 155 A (CN RAILWAY SIYUAN SURVEY & DES; CHINA RAILWAY CONSTRUCTION CORP LTD) 18 July 2023 (2023-07-18)<br>* the whole document * | 1-9 | |
| | - - - - - | | |
| A | ZNIDARIC ALES ET AL: "Railway Bridge Weigh-in-Motion System",<br>TRANSPORTATION RESEARCH PROCEDIA,<br>vol. 14, 18 January 2016 (2016-01-18),<br>pages 4010-4019, XP093293719,<br>ISSN: 2352-1465, DOI:<br>10.1016/j.trpro.2016.05.498<br>* Sections 2.1, 2.2, 3.4, 4 * | 1-9 | |
| | - - - - - | | TECHNICAL FIELDS SEARCHED (IPC)<br><br>B61L |

The present search report has been drawn up for all claims

| Place of search | Date of completion of the search | Examiner |
|---|---|---|
| Munich | 17 July 2025 | Christlen, Loic |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 5710

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | Publication date | Patent family member(s) | | Publication date |
|---|---|---|---|---|
| US 2023019808 A1 | 19-01-2023 | CN | 115541150 A | 30-12-2022 |
| | | JP | 7647396 B2 | 18-03-2025 |
| | | JP | 2023006425 A | 18-01-2023 |
| | | US | 2023019808 A1 | 19-01-2023 |
| CN 116451155 A | 18-07-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024048340 A

- JP 2014006161 A